# EUROPÄISCHE PATENTSCHRIFT

(11) **EP 1 502 269 B1**
(45) Veröffentlichungstag und Bekanntmachung des Hinweises auf die Patenterteilung: **22.02.2006**
(21) Anmeldenummer: 03747397.2
(22) Anmeldetag: 05.05.2003
(51) Int. Cl.: H01G 9/00

(54) **ELEKTRODE UND EIN VERFAHREN ZU DEREN HERSTELLUNG**
ELECTRODE AND METHOD FOR THE PRODUCTION THEREOF
ELECTRODE ET SON PROCEDE DE FABRICATION

(30) Priorität: 03.05.2002 DE 10219908
(43) Veröffentlichungstag der Anmeldung: 02.02.2005
(73) Patentinhaber: EPCOS AG, 81669 München (DE)
(72) Erfinder: MICHEL, Hartmut, 89520 Heidenheim (DE); WEBER, Christoph, 89522 Heidenheim (DE)
(74) Vertreter: Epping - Hermann - Fischer
(86) Internationale Anmeldenummer: PCT/DE2003/001425
(87) Internationale Veröffentlichungsnummer: WO 2003/094183

(56) Entgegenhaltungen:
- EP-A- 1 202 302
- DE-C- 19 534 047

## Beschreibung

Die Elektroden vieler elektrischer Bauelemente, beispielsweise von elektrochemischen Doppelschichtkondensatoren oder von Pseudokondensatoren weisen als Elektrodenmaterial Kohlenstoff, beispielsweise aktivierten Kohlenstoff, auf. Das Elektrodenmaterial wird dabei häufig in Pulverform auf elektrisch gut leitende Stromkollektoren aufgebracht bzw. auf diesen durch chemische oder elektrochemische Abscheidungsprozesse erzeugt. Die elektrisch leitenden Stromkollektoren liegen häufig in Form von dünnen Metallfolien, beispielsweise Aluminiumfolien vor. Bei Aluminiumfolien wird das den elektrischen Widerstand erhöhende Aluminiumoxid auf der Oberfläche der Folie, z. B. durch Ätzen, entfernt, so daß anschließend das Elektrodenmaterial aufgebracht werden kann. Häufig wird die Oberfläche der Aluminiumfolie durch die Erzeugung einer Oberflächentopographie, beispielsweise durch Ätzen, vergrößert. Dies vergrößert auch die Oberfläche der Elektroden und führt somit auch zu Kondensatoren höherer Kapazität. Während der Verarbeitung der mit dem Elektrodenmaterial beschichteten Aluminiumfolien, aber auch während des Einsatzes dieser Elektroden in elektrochemischen Doppelschicht- oder Pseudo-Kondensatoren, ist es zwingend notwendig, daß der flächenbezogene elektrische Widerstand zwischen dem Stromkollektor, also der Aluminiumfolie, und dem Elektrodenmaterial über die Lebensdauer des Kondensators hinweg minimal bleibt. Dokument DE-A-195 34 047 offenbart einen Anodenstromkollektor der aus mehreren Schichten besteht, deren eine aus einem ersten Metall besteht, und wenigsten eine zweite Schicht eine intermetallische Verbindung des ersten Metalls mit einem zweiten Metall beinhaltet.

Während des Betriebs von elektrochemischen Doppelschicht- oder Pseudo-Kondensatoren kommt es allerdings häufig zu einer Delamination des Elektrodenmaterials von der Aluminiumfolie und zur Bildung einer schlecht elektrisch leitenden Schicht zwischen der Aluminiumfolie und dem Elektrodenmaterial. Diese Verschlechterung des Kontakts zwischen dem Elektrodenmaterial und dem Stromkollektor führt häufig zu einem Anstieg des Serienwiderstands der Kondensatoren und damit zu höheren ohmschen Verlusten beim Betrieb dieser Kondensatoren.

Ziel der vorliegenden Erfindung ist es daher, eine Elektrode zur Verfügung zu stellen, die einen stark verringerten Anstieg des Serienwiderstands während des Betriebs des elektrischen Bauteils aufweist.

Diese Aufgabe wird mit einer Elektrode nach Anspruch 1 gelöst. Vorteilhafte Ausgestaltungen der Elektrode sowie Verfahren zu ihrer Herstellung und ein Kondensator mit dieser Elektrode sind Gegenstand weiterer Ansprüche.

Eine erfindungsgemäße Elektrode weist einen flächig ausgeformten, elektrischen leitenden Stromkollektor auf, auf dem formschlüssig eine korrosionsbeständige, metallisch leitfähige innere Zwischenschicht angeordnet ist. Auf der inneren Zwischenschicht ist weiterhin formschlüssig eine korrosionsbeständige, metallisch leitfähige äußere Zwischenschicht angeordnet. Auf dieser äußeren Oberfläche ist formschlüssig eine Elektrodenschicht angeordnet, die Kohlenstoff umfaßt.

Im Gegensatz zu einer herkömmlichen Elektrode, bei der das Elektrodenmaterial direkt im Kontakt mit der Aluminiumfolie steht, sind bei einer erfindungsgemäßen Elektrode zwischen der Elektrodenschicht und dem Stromkollektor zumindest zwei korrosionsbeständige, metallisch leitfähige Zwischenschichten angeordnet. Aufgrund ihrer Korrosionsbeständigkeit und ihrer metallischen Leitfähigkeit garantieren diese Zwischenschichten zum einen eine gute elektrisch leitende Verbindung zwischen dem Stromkollektor und der Elektrodenschicht und sind darüber hinaus aufgrund ihrer Korrosionsbeständigkeit besonders stabil gegenüber der Bildung von z.B. schlecht elektrisch leitenden Oberflächenoxidschichten.

In einer weiteren vorteilhaften Ausgestaltung der Erfindung weist die äußere Oberfläche der äußeren Zwischenschicht eine Rauhigkeit auf. Die Rauhigkeit der äußeren Oberfläche der äußeren Zwischenschicht ermöglicht einen besonders guten und innigen Kontakt der äußeren Zwischenschicht zum Elektrodenmaterial, so daß auch ein guter Kontakt nicht nur zwischen Stromkollektor und den Zwischenschichten, sondern auch zwischen den Zwischenschichten und dem Elektrodenmaterial resultiert.

Unter Rauhigkeit im Sinne der Erfindung ist dabei eine Oberfläche zu verstehen, die eine Rauhtiefe zwischen 1 bis 50 µm, bei gleichmäßiger Oberflächentopographie aufweist. Die Rauhtiefe gibt dabei den Höhenunterschied zwischen "Einbuchtungen" und "Erhebungen" auf der Oberfläche an, so daß ein Maß für die Rauhheit der Oberfläche angegeben ist. Dabei sind die Erhebungen und die Einbuchtungen auf der Oberfläche gleichmäßig über die Oberfläche verteilt, so daß eine gleichmäßige Oberflächentopographie resultiert. Die Rauhtiefe ist für einen Fachmann in einfacher Weise, beispielsweise mittels Rasterelektronenmikroskopie bestimmbar.

In einer weiteren Ausgestaltung der erfindungsgemäßen Elektrode sind die innere und äußere Zwischenschicht und eine weitere Elektrodenschicht auch auf der anderen Hauptoberfläche des Stromkollektors angeordnet. Bei dieser Variante sind also beide Hauptoberflächen des Stromkollektors mit den Zwischenschichten und den Elektrodenschichten bedeckt.

Vorteilhafterweise weist die äußere Oberfläche der äußeren Zwischenschicht eine Rauhtiefe von etwa 1 bis 10 µm bei gleichmäßiger Oberflächentopographie auf. Rauhtiefen dieser Größenordnung sind besonders leicht, beispielsweise durch chemische Ätzverfahren, zu realisieren, gewährleisten aber nach wie vor eine gute Verbindung und Verzahnung der äußeren Zwischenschicht mit der Elektrodenschicht.

Die innere Zwischenschicht umfaßt vorteilhafterweise ein Metall, beispielsweise ein Metall aus der IV bis VI Nebengruppe des Periodensystems. Das Metall kann dabei aus folgenden Metallen ausgewählt sein: Titan, Molybdän, Wolfram, Vanadium, Tantal, Zircon und Niob. Diese Metalle sind einerseits sehr gut zu verarbeiten und andererseits auch sehr korrosionsbeständig.

In einer weiteren vorteilhaften Ausgestaltung einer erfindungsgemäßen Elektrode umfaßt die äußere Zwischenschicht eine Metallegierung, die beispielsweise aus folgenden Legierungen ausgewählt ist:
Metallcarbid, Metallnitrid, Metallcarbonitrid und Metallborid.

Unter Metall-Legierungen im Sinne der Erfindung sind metallisch leitfähige Gemische von Metallen mit zumindest einer weiteren Komponente zu verstehen, so daß sowohl Metallcarbide, Metallboride, Metallcarbonitride als auch Metallnitride als Legierungen aufgefaßt werden. Das Metall der Metall-Legierung ist dabei aus der IV bis VI Nebengruppe des Periodensystems ausgewählt, also wie bereits oben genannt, aus den folgenden Metallen: Titan, Molybdän, Wolfram, Vanadium, Tantal, Zircon und Niob. Die Zwischenschicht kann ein Metallcarbid, ein Metallnitrid oder ein Metallcarbonitrid sein, wobei Carbonitride Mischkristalle aus Carbiden und Nitriden sind.

In einer weiteren Ausgestaltung umfaßt die Elektrodenschicht Kohlenstoff. Dabei kann es sich beispielsweise um Aktivkohlenstoff handeln, der in pastöser oder fester Form aufgebracht wird. Elektroden mit derartigen Elektrodenschichten können z.B. in Doppelschichtkondensatoren Verwendung finden.

Es ist aber auch möglich, daß die Elektrodenschicht beispielsweise elektrisch leitfähige Polymere umfaßt. Elektroden mit derartigen Elektrodenschichten können z.B. in Pseudokondensatoren eingesetzt werden.

Der Stromkollektor kann eine Aluminiumfolie umfassen. Vorteilhafterweise weist der Stromkollektor dabei Durchbrechungen auf. Eine Durchbrechung führt dabei jeweils durch die zwei sich gegenüberliegenden Hauptoberflächen des Stromkollektors und stellt somit ein durchgehendes Loch im Stromkollektor dar. Aufgrund der Durchbrechungen im Stromkollektor und der Formschlüssigkeit mit der inneren Zwischenschicht und der darauf befindlichen Elektrodenschicht sind bei dieser besonders vorteilhaften Variante einer erfindungsgemäßen Elektrode die Zwischenschichten und die Elektrodenschicht besonders gut haftend mit dem Stromkollektor verbunden.

Besonders vorteilhaft ist es bei dieser Variante einer erfindungsgemäßen Elektrode, die innere und äußere Zwischenschicht sowie die Elektrodenschicht auch auf der anderen Hauptoberfläche des Stromkollektors zu erzeugen. In diesem Fall können sich sowohl die auf den gegenüberliegenden Hauptoberflächen befindlichen Zwischenschichten als auch die Elektrodenschichten in den Durchbrechungen des Stromkollektors verbinden, so daß eine besonders gute Haftung zwischen den Zwischenschichten, Elektrodenschichten und dem Stromkollektor resultiert.

Erfindungsgemäße Stromkollektoren mit Durchbrechungen können dabei ein Netz aus Metalldrähten umfassen, so daß der Stromkollektor durch Weben der Metalldrähte zu einem Netz hergestellt werden kann. Weiterhin kann der Stromkollektor ein geätztes Schaummetall umfassen. Schaummetalle werden durch Gasentwicklung in der Schmelze aufgeschäumt und porös gemacht. Dabei bilden Gase im Metall Blasen, die nach dessen Auskühlen und Aushärten Hohlräume im Metallschaum bilden. Die Wände dieser Hohlräume sind häufig sehr dünn, so daß durch selektives Ätzen der Wände dieser Hohlräume z. B. mittels Säuren oder Basen die Hohlräume beidseitig geöffnet werden können, so daß die Durchbrechungen erzeugt werden. Weiterhin ist es möglich, den Stromkollektor mit Durchbrechungen, beispielsweise durch Schlitzen und Streckziehen einer Metallfolie, zu erzeugen.

Erfindungsgemäße Stromkollektoren können auch Metallfolien mit einer Vielzahl kleiner Löcher mit Durchmessern zwischen 0,2 mm bis 2 mm umfassen, die z.B. mittels eines Stanzprozesses mit einer Walze oder Platte oder durch Laserschweißen erzeugt wurden.

Gegenstand der Erfindung ist weiterhin ein Verfahren zur Herstellung einer erfindungsgemäßen Elektrode mit den folgenden Verfahrensschritten: Im Verfahrensschritt A) wird auf einer Hauptoberfläche eines flächig ausgeformten Stromkollektors eine innere, metallisch leitfähige Zwischenschicht erzeugt. Anschließend wird im Verfahrensschritt B) auf der inneren Zwischenschicht eine äußere, metallisch leitfähige Zwischenschicht erzeugt. Danach wird im Verfahrensschritt C) auf der äußeren Zwischenschicht eine erste Elektrodenschicht erzeugt, die Kohlenstoff umfaßt.

In einer vorteilhaften Ausgestaltung des Verfahrens wird im Verfahrensschritt A) eine Metallschicht mittels Chemical Vapour Deposition (CVD) oder mittels Physical Vapour Deposition (PVD) erzeugt.

Vorteilhafterweise wird im Verfahrensschritt B) eine Metall-Legierung ebenfalls mittels CVD- oder PVD-Verfahren erzeugt. Beide Verfahren sind einem Fachmann geläufig, wobei beim CVD-Verfahren häufig Metalle oder Metall-Legierungen aus der Gasphase abgeschieden werden, während im PVD-Verfahren ionisierte Teilchen in einem elektrischen Feld aufgebracht werden.

In einer weiteren vorteilhaften Ausgestaltung des erfindungsgemäßen Verfahrens wird in Verfahrensschritt A) als innere Zwischenschicht eine Metallschicht erzeugt und anschließend im Verfahrensschritt B) oberflächennahe Bereiche dieser inneren Metallschicht mit zumindest einem aus der Gasphase abgeschiedenem Stoff zur Reaktion gebracht, der ausgewählt ist aus Kohlenstoff, Stickstoff und Bor. Dabei wird als äußere Zwischenschicht eine Metall-Legierung gebildet, die je nach dem verwendeten Stoff ausgewählt ist aus: Metallcarbid, Metallnitrid, Metallcarbonitrid und Metallborid. Durch die Reaktion der inneren Zwischenschicht, die hier als Metallschicht vorliegt, mit den oben genannten Stoffen aus der Gasphase wird eine besonders vorteilhafte innige Verzahnung zwischen den beiden Zwischenschichten erreicht. Möglich ist es aber auch, daß im Verfahrensschritt B) eine Metall-Legierung als äußere Zwischenschicht direkt aus der Gasphase abgeschieden wird ohne daß es zu einer Legierungsbildung mit der inneren Zwischenschicht kommt.

In einer weiteren vorteilhaften Ausgestaltung eines erfindungsgemäßen Verfahrens wird vor dem Verfahrensschritt C) nach dem Erzeugen der äußeren Zwischenschicht die äußere Oberfläche der äußeren Zwischenschicht im Verfahrensschritt B1) aufgerauht. Die Aufrauhung der äußeren Oberfläche der äußeren Zwischenschicht kann dabei mittels mechanischer oder chemischer Verfahren erfolgen. Dies kann beispielsweise mittels Sandstrahlverfahren oder durch chemisches Beizen, z. B. mit Säuren wie Schwefelsäure oder Salpetersäure, geschehen. Wie bereits beschrieben, hat diese rauhe Oberfläche der äußeren Zwischenschicht den Vorteil, daß eine besonders innige Verbindung zur Elektrodenschicht zustande kommt. Es auch möglich, die äußere Zwischenschicht so zu erzeugen, daß sie bereits eine Oberfläche mit einer geeigneten Rauhigkeit aufweist. Wichtige Prozeßparameter für die Abscheidung einer rauhen äußeren Zwischenschicht sind vor allem die Temperatur, die Niederschlagsgeschwindigkeit der Partikel der äußeren Zwischenschicht sowie der Gasdruck. Der Vorteil einer solchen Variante eines erfindungsgemäßen Verfahrens besteht darin, daß die äußere Zwischenschicht mit der Oberfläche, die eine Rauhigkeit aufweist, vorteilhafterweise in einem einzigen Verfahrensschritt B) erzeugt wird, ohne nachträglich noch die oben genannten Sandstrahl- oder chemischen Ätzverfahren anwenden zu müssen.

In einer weiteren Ausgestaltung des erfindungsgemäßen Verfahrens wird im Verfahrensschritt C) die Elektrodenschicht durch Aufrakeln einer flüssigen oder viskosen Phase, die das Elektrodenmaterial enthält, erzeugt.

Wenn der Stromkollektor eine Aluminiumfolie ist, werden vor dem Verfahrensschritt A) Oberflächenschichten der Aluminiumfolie zur Verbesserung der Leitfähigkeit der Folie entfernt. Dabei wird in der Regel die Aluminiumoxidschicht der Aluminiumfolie, beispielsweise durch eine Wasserstoff-Plasma-Behandlung, durch elektrochemische Ätzverfahren oder durch nicht reaktives Sputtern entfernt.

Gegenstand der Erfindung ist weiterhin ein elektrochemischer Kondensator mit zumindest zwei erfindungsgemäßen Elektroden, wobei zwischen den Elektroden ein poröser Separator angeordnet ist und sowohl die Elektroden als auch der Separator mit einem Elektrolyten in Kontakt stehen. Der poröse Separator kann dabei beispielsweise poröse Polymerfilme, Vliese, Filze, Gewebe aus Polymeren, Fiberglas oder auch Papiere umfassen. Ein derartiger elektrochemischer Kondensator hat gegenüber herkömmlichen Kondensatoren den Vorteil, daß es während des Betriebs dieses Kondensators nur zu einem verminderten Anstieg des Serienwiderstandes im Vergleich zu herkömmlichen Kondensatoren kommt.

Im Folgenden soll die Erfindung anhand von Ausführungsbeispielen und Figuren noch näher erläutert werden.
Figur 1 zeigt eine herkömmliche Elektrode im Querschnitt.
Die Figuren 2A bis 2E zeigen eine mögliche Variante eines Herstellungsverfahrens für erfindungsgemäße Elektroden im Querschnitt.
Figur 3 zeigt eine weitere vorteilhafte Variante einer erfindungsgemäßen Elektrode in perspektivischer Ansicht.

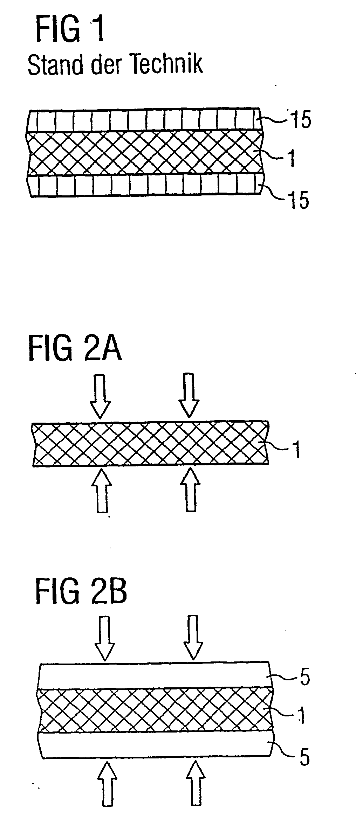

Figur 1 zeigt eine herkömmliche Elektrode im Querschnitt, wobei beidseitig auf den Stromkollektor 1, beispielsweise eine Aluminiumfolie, das Elektrodenmaterial 15 aufgebracht ist. Bei einer derartigen Elektrode kann es während des Betriebs des Kondensators dazu kommen, daß sich das Elektrodenmaterial 15 vom Stromkollektor 1 ablöst, so daß, wie bereits oben beschrieben, eine Erhöhung des Serienwiderstands des Kondensators resultiert.

In Figur 2A ist der Stromkollektor 1, beispielsweise eine Aluminiumfolie, vor dem Verfahrensschritt A) des erfindungsgemäßen Verfahrens im Querschnitt gezeigt. Die Pfeile markieren schematisch die beiden Hauptoberflächen des Stromkollektors 1, auf dem anschließend im Verfahrensschritt A) die innere Zwischenschicht erzeugt werden kann. Dies kann, wie bereits oben erwähnt, mittels CVD- oder PVD-Verfahren erfolgen.

Figur 2B zeigt den Stromkollektor 1 mit beidseitig aufgebrachten inneren Zwischenschichten 5 nach dem Verfahrensschritt A). Die innere Zwischenschicht 5 kann beispielsweise Titan sein. Die Schichtdicke der inneren Zwischenschicht liegt typischerweise im Bereich von etwa 1 bis 2 µm. Die Pfeile markieren die Flächen, auf die im Verfahrensschritt B) die äußere Zwischenschicht aufgetragen wird.

Figur 2C zeigt die Anordnung der Schichten nach dem Verfahrensschritt B). Bei dem hier dargestellten Verfahren ist zu sehen, daß der Stromkollektor 1 beidseitig mit der inneren Zwischenschicht 5 bedeckt ist. Auf dieser inneren Zwischenschicht 5 befindet sich die äußere Zwischenschicht 10A, deren äußere Oberfläche unmittelbar nach ihrer Erzeugung in diesem Fall glatt ist.

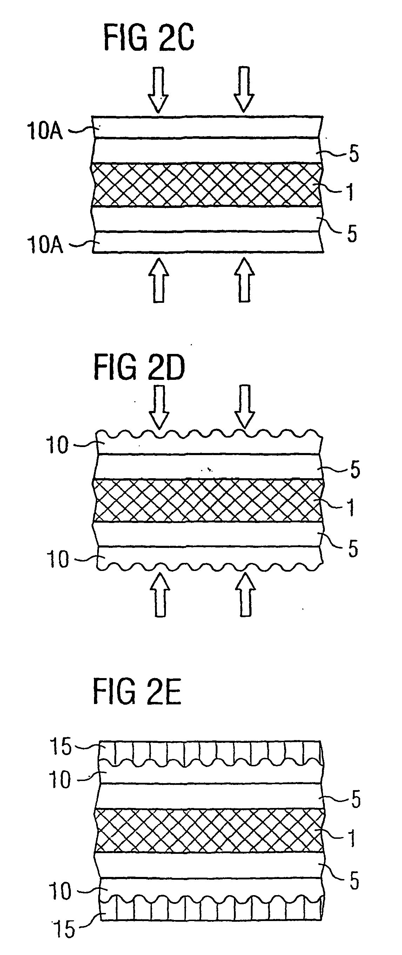

Figur 2D zeigt die Schichtanordnung im Querschnitt nach dem zusätzlichen Verfahrensschritt B1). Zu sehen ist, daß die äußere Oberfläche der äußeren Zwischenschicht aufgerauht wurde.

Dies kann beispielsweise mittels eines Sandstrahlverfahrens oder durch chemischem Beizen passieren. Dadurch wird die äußere Zwischenschlicht 10 gebildet, deren äußere Oberfläche eine Rauhheit aufweist.

Figur 2E zeigt eine erfindungsgemäße Elektrode nach dem Verfahrensschritt C). Zu sehen ist, daß beidseitig auf die äußere Oberfläche der rauhen äußeren Zwischenschicht die Elektrodenschicht 15 aufgebracht worden ist. Dies kann beispielsweise durch Aufrakeln einer flüssigen oder viskosen Phase, die das Elektrodenmaterial enthält, geschehen. Es ist auch möglich, einen trockenen Film aufzulaminieren.

Die flüssige oder viskose Phase enthält dabei häufig Kohlenstoffpulver mit mittleren Korngrößen zwischen 0,01 und 20 µm. Das Kohlenstoffpulver ist dabei häufig mit einem Bindemittel, z. B. Polytetrafluorethylen, Polyvinyldifluorid und Carboxymethylcellulose gemischt, das im getrockneten Zustand das Material der Elektrodenschicht zusammenhält. Der Gewichtsanteil des Binders an der Mischung beträgt zwischen 2 bis 20 %, typischerweise 5 %. Die Dicke der Stromkollektorfolie liegt dabei häufig zwischen 20 und 70 µm.

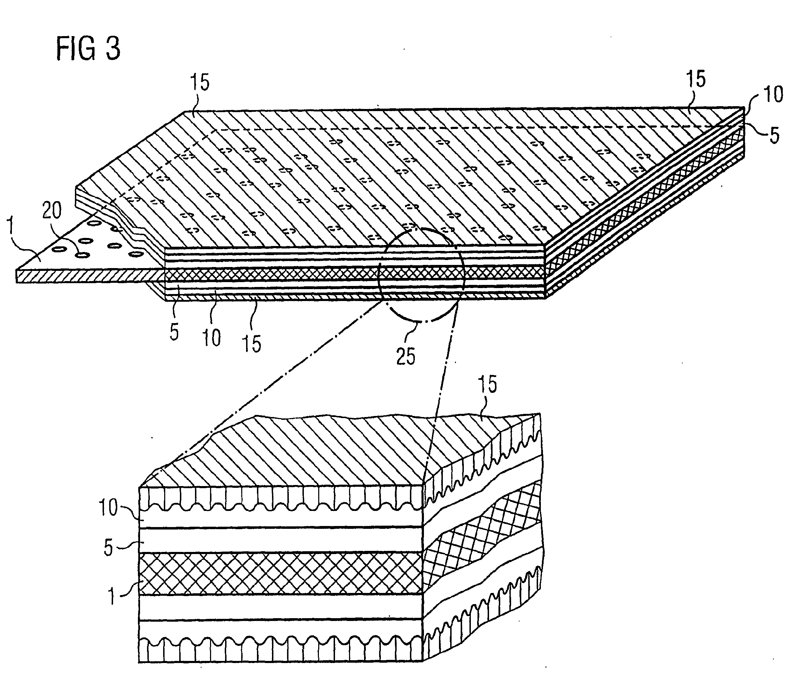

Figur 3 zeigt eine besonders vorteilhafte Variante einer erfindungsgemäßen Elektrode, bei der Durchbrechungen 20 im Stromkollektor 1 vorhanden sind. In diesem Fall ist der Stromkollektor, wie bereits beim Verfahren gezeigt, ebenfalls beidseitig mit den beiden Zwischenschichten und der Elektrodenschicht bedeckt, so daß sich die Zwischenschichten und die Elektrodenschichten besonders vorteilhaft von beiden Seiten in den Durchbrechungen kontaktieren können. Daraus resultiert eine besonders gute und feste Verzahnung zwischen dem Stromkollektor und den auf ihm befindlichen Schichten. Ein vergrößerter Ausschnitt aus der Schnittkante 25 zeigt die Abfolge der verschiedenen Schichten im Detail.

Alle Figuren zeigen die erfindungsgemäßen Elektroden nur schematisch. Aus diesem Grund können die hier gezeigten Schichtdicken der verschiedenen Schichten der erfindungsgemäßen Elektrode und die Verhältnisse ihrer Dicken zueinander bei verschiedenen Ausführungsformen stark variieren.

Die Erfindung beschränkt sich auch nicht auf die hier gezeigten Ausführungsbeispiele. So ist es beispielsweise noch möglich, die erfindungsgemäßen Elektroden in Hybrid- oder Pseudokondensatoren einzusetzen. Weitere Variationen sind beispielsweise auch bezüglich der Ausformung der Elektroden möglich.

## Patentansprüche

1. Elektrode mit den Merkmalen:
- ein flächig ausgeformter, elektrisch leitender Stromkollektor (1) ist vorhanden,
- eine korrosionsbeständige, metallisch leitfähige innere Zwischenschicht (5) ist zumindest auf einer Hauptoberfläche des Stromkollektors (1) formschlüssig angeordnet,
- auf der inneren Zwischenschicht (5) ist formschlüssig eine korrosionsbeständige, metallisch leitfähige äußere Zwischenschicht (10) angeordnet,
- auf der äußeren Oberfläche der äußeren Zwischenschicht ist formschlüssig eine Elektrodenschicht (15) angeordnet, die Kohlenstoff umfaßt.

2. Elektroden nach dem vorhergehenden Anspruch,
- bei der die äußere Oberfläche der äußeren Zwischenschicht (10) eine Rauhigkeit aufweist.

3. Elektrode nach einem der vorhergehenden Ansprüche,
- bei der eine innere und äußere Zwischenschicht und eine weitere Elektrodenschicht auch auf der anderen Hauptoberfläche des Stromkollektors angeordnet sind.

4. Elektrode nach einer der vorhergehenden Ansprüche,
- bei der die äußere Oberfläche der äußeren Zwischenschicht (10) eine Rauhtiefe von etwa 1 bis 10 µm bei gleichmäßiger Oberflächentopographie aufweist.

5. Elektrode nach einem der vorhergehenden Ansprüche,
- bei der die innere Zwischenschicht (5) ein Metall umfaßt.

6. Elektrode nach dem vorhergehenden Anspruch,
- bei dem das Metall aus der IV bis VI Nebengruppe des Periodensystems ist.

7. Elektrode nach einem der Ansprüche 5 oder 6,
- bei der das Metall ausgewählt ist aus folgenden Metallen:
Titan, Molybdän, Wolfram, Vanadium, Tantal, Zircon und Niob.

8. Elektrode nach einem der vorhergehenden Ansprüche,
- bei der die äußere Zwischenschicht (10) eine Metall-Legierung umfaßt.

9. Elektrode nach dem vorhergehenden Anspruch,
- bei dem die Metall-Legierung ein Metallcarbid und/oder ein Metallnitrid ist.

10. Elektrode nach einer der Ansprüche 8 oder 9,
- bei der das Metall der Metall-Legierung aus der IV bis VI Nebengruppe des Periodensystems ausgewählt ist.

11. Elektrode nach einer der Ansprüche 9 oder 10,
- bei der das Metall der Metall-Legierung ausgewählt ist aus folgenden Metallen:
Titan, Molybdän, Wolfram, Vanadium, Tantal, Zircon und Niob.

12. Elektrode nach einer der vorhergehenden Ansprüche,
- bei der der Stromkollektor eine Aluminium-Folie umfaßt.

13. Elektrode nach einer der vorhergehenden Ansprüche,
- bei der der Stromkollektor Durchbrechungen (20) aufweist.

14. Elektrode nach dem vorhergehenden Anspruch,
- bei der der Stromkollektor (1) eine mit Durchbrechungen (20) versehene und gestreckte Aluminiumfolie umfaßt.

15. Elektrode nach Anspruch 13,
- bei der der Stromkollektor ein Netz aus Metalldrähten umfaßt.

16. Elektrode nach Anspruch 13,
- bei der der Stromkollektor ein geätztes Schaummetall umfaßt.

17. Elektrode nach Anspruch 13,
- bei der der Stromkollektor eine Metallfolie mit gestanzten oder lasergeschweißten Löchern umfaßt.

18. Verfahren zur Herstellung einer Elektrode mit den Verfahrensschritten:
A) auf einer Hauptoberfläche eines flächig ausgeformten Stromkollektors (1) wird eine innere metallisch leitfähige Zwischenschicht (5) erzeugt,
B) auf der inneren Zwischenschicht wird eine äußere metallisch leitfähige Zwischenschicht (10) erzeugt,
C) auf der äußeren Zwischenschicht (10) wird eine erste Elektrodenschicht (15) erzeugt, die Kohlenstoff umfaßt.

19. Verfahren nach dem vorhergehenden Anspruch,
- bei dem im Verfahrensschritt A) eine Metallschicht (5) mittels CVD- oder PVD-Verfahren erzeugt wird.

20. Verfahren nach einem der Ansprüche 18 oder 19,
- bei dem im Verfahrensschritt B) eine Metall-Legierung (10) mittels CVD- oder PVD-Verfahren erzeugt wird.

21. Verfahren nach dem vorhergehenden Anspruch,
- bei dem im Verfahrenschritt A) eine Metallschicht erzeugt wird,
- bei dem im Verfahrensschritt B) oberflächenahe Bereiche der inneren Metallschicht (5) mit aus der Gasphase abgeschiedenen Stoffen, die ausgewählt sind aus Kohlenstoff, Stickstoff und Bor zur Reaktion gebracht werden, wobei eine Metall-Legierung aus folgenden Legierungen gebildet wird: Metallcarbid, Metallnitrid, Metallcarbonitrid und Metallborid.

22. Verfahren nach Anspruch 20,
- bei dem eine Metall-Legierung aus der Gasphase abgeschieden wird, die aus folgenden Legierungen ausgewählt ist:
Metallcarbid, Metallnitrid und Metallborid.

23. Verfahren nach einem der Ansprüche 18 bis 22,
- bei dem vor dem Verfahrensschritt C) in einem zusätzlichen Verfahrensschritt B1) die äußere Oberfläche der äußeren Zwischenschicht aufgerauht wird.

24. Verfahren nach dem vorhergehenden Anspruch,
- bei dem die Oberfläche mittels mechanischer oder chemischer Verfahren aufgerauht wird.

25. Verfahren nach einem der Ansprüche 18 bis 24,
- bei dem im Verfahrensschritt C) die Elektrodenschicht (15) durch Aufrakeln einer flüssigen oder viskosen Phase, die das Elektrodenmaterial enthält, erzeugt wird.

26. Verfahren nach einem der Ansprüche 18 bis 25,
- bei dem als Stromkollektor eine Aluminiumfolie verwendet wird,
- bei dem vor dem Verfahrensschritt A) Oberflächenschichten der Aluminiumfolie zur Verbesserung der Leitfähigkeit der Folie entfernt werden.

27. Elektrochemischer Kondensator,
- mit Elektroden nach einem der Ansprüche 1 bis 17,
- bei dem zwischen den Elektroden ein poröser Separator angeordnet ist,
- wobei die Elektroden und der Separator mit einem Elektrolyten in Kontakt stehen.

## Claims

1. Electrode comprising the following features:
- an electrically conductive current collector (1) shaped in sheetlike fashion is present,
- a corrosion-resistant, metallically conductive inner intermediate layer (5) is arranged in positively locking fashion at least on one main surface of the current collector (1),
- a corrosion-resistant, metallically conductive outer intermediate layer (10) is arranged in positively locking fashion on the inner intermediate layer (5),
- an electrode layer (15) comprising carbon is arranged in positively locking fashion on the outer surface of the outer intermediate layer.

2. Electrode according to the preceding claim,
- in which the outer surface of the outer intermediate layer (10) has a roughness.

3. Electrode according to one of the preceding claims,
- in which an inner and outer intermediate layer and a further electrode layer are also arranged on the other main surface of the current collector.

4. Electrode according to one of the preceding claims,
- in which the outer surface of the outer intermediate layer (10) has a peak-to-valley height of approximately 1 to 10 µm with uniform surface topography.

5. Electrode according to one of the preceding claims,
- in which the inner intermediate layer (5) comprises a metal.

6. Electrode according to the preceding claim,
- in which the metal is from subgroup IV to VI of the periodic table.

7. Electrode according to either of Claims 5 and 6,
- in which the metal is selected from the following metals; titanium, molybdenum, tungsten, vanadium, tantalum, zirconium and niobium.

8. Electrode according to one of the preceding claims,
- in which the outer intermediate layer (10) comprises a metal alloy.

9. Electrode according to the preceding claim,
- in which the metal alloy is a metal carbide and/or a metal nitride.

10. Electrode according to either of Claims 8 and 9,
- in which the metal of the metal alloy is selected from subgroup IV to VI of the periodic table.

11. Electrode according to either of Claims 9 and 10,
- in which the metal of the metal alloy is selected from the following metals:
titanium, molybdenum, tungsten, vanadium, tantalum, zirconium and niobium.

12. Electrode according to one of the preceding claims,
- in which the current collector comprises an aluminium foil.

13. Electrode according to one of the preceding claims,
- in which the current collector has perforations (20).

14. Electrode according to the preceding claims,
- in which the current collector (1) comprises a stretched aluminium foil provided with perforations (20).

15. Electrode according to Claim 13,
- in which the current collector comprises a network of metal wires.

16. Electrode according to Claim 13,
- in which the current collector comprises an etched foamed metal.

17. Electrode according to Claim 13,
- in which the current collector comprises a metal foil with stamped or laser-welded holes.

18. Method for the production of an electrode, comprising the following method steps:
A) an inner metallically conductive intermediate layer (5) is produced on a main surface of a current collector (1) shaped in sheetlike fashion,
B) an outer metallically conductive intermediate layer (10) is produced on the inner intermediate layer,
C) a first electrode layer (15) comprising carbon is produced on the outer intermediate layer (10).

19. Method according to the preceding claim,
- in which, in method step A), a metal layer (5) is produced by means of CVD or PVD methods.

20. Method according to either of Claims 18 and 19,
- in which, in method step B), a metal alloy (10) is produced by means of CVD or PVD methods.

21. Method according to the preceding claim,
- in which, in method step A), a metal layer is produced,
- in which, in method step B), regions of the inner metal layer (5) that are near the surface are caused to react with substances that are deposited from the gas phase and are selected from carbon, nitrogen and boron, a metal alloy from the following alloys being formed: metal carbide, metal nitride, metal carbonitride and metal boride.

22. Method according to Claim 20,
- in which a metal alloy is deposited from the gas phase which is selected from the following alloys:
metal carbide, metal nitride and metal boride.

23. Method according to one of Claims 18 to 22,
- in which, prior to method step C), in an additional method step B1), the outer surface of the outer intermediate layer is roughened.

24. Method according to the preceding claim,
- in which the surface is roughened by means of mechanical or chemical methods.

25. Method according to one of Claims 18 to 24,
- in which, in method step C), the electrode layer (15) is produced by application by blade coating of a liquid or viscous phase containing the electrode material.

26. Method according to one of Claims 18 to 25,
- in which an aluminium foil is used as the current collector,
- in which, prior to method step A), surface layers of the aluminium foil are removed in order to improve the conductivity of the foil.

27. Electrochemical capacitor,
- comprising electrodes according to one of Claims 1 to 17,
- in which a porous separator is arranged between the electrodes,
- the electrodes and the separator being in contact with an electrolyte.

## Revendications

1. Électrode ayant les caractéristiques :
- un collecteur (1) de courant de forme plate et conducteur de l'électricité est présent ;
- une couche (5) intermédiaire intérieure à conduction métallique et résistant à la corrosion est disposée à complémentarité de forme au moins sur une surface principale du collecteur (1) de courant ;
- une couche (10) intermédiaire extérieure à conduction métallique et résistant à la corrosion est disposée à complémentarité de forme sur la couche (5) intermédiaire intérieure ;
- une couche (15) d'électrode qui comprend du carbone est disposée à complémentarité de forme sur la surface extérieure de la couche intermédiaire extérieure.

2. Électrode suivant la revendication précédente,
- dans laquelle la surface extérieure de la couche (10) intermédiaire extérieure a de la rugosité.

3. Électrode suivant l'une des revendications précédentes,
- dans laquelle une couche intermédiaire intérieure et une couche intermédiaire extérieure et une autre couche d'électrode sont disposées aussi sur l'autre surface principale du collecteur de courant.

4. Électrode suivant l'une des revendications précédentes,
- dans laquelle la surface extérieure de la couche (10) intermédiaire extérieure a une profondeur de rugosité d'environ 1 à 10 µm pour une topographie de surface uniforme.

5. Électrode suivant l'une des revendications précédentes,
- dans laquelle la couche (5) intermédiaire intérieure comprend un métal.

6. Électrode suivant la revendication précédente,
- dans laquelle le métal est du sous-groupe IV à VI de la classification périodique des éléments.

7. Électrode suivant la revendication 5 ou 6,
- dans laquelle le métal est choisi parmi les métaux suivants : titane, molybdène, tungstène, vanadium, tantale, zirconium et niobium.

8. Électrode suivant l'une des revendications précédentes,
- dans laquelle la couche (10) intermédiaire extérieure comprend un alliage métallique.

9. Électrode suivant la revendication précédente,
- dans laquelle l'alliage métallique est un carbure de métal et/ou un nitrure de métal.

10. Électrode suivant la revendication 8 ou 9,
- dans laquelle le métal ou l'alliage métallique est choisi dans les sous-groupes IV à VI de la classification périodique des éléments.

11. Électrode suivant la revendication 9 ou 10,
- dans laquelle le métal de l'alliage métallique est choisi parmi les métaux suivants : titane, molybdène, tungstène, vanadium, tantale, zirconium et niobium.

12. Électrode suivant l'une des revendications précédentes,
- dans laquelle le collecteur de courant comprend une feuille d'aluminium.

13. Électrode suivant l'une des revendications précédentes,
- dans laquelle le collecteur de courant a des traversées (20).

14. Électrode suivant la revendication précédente,
- dans laquelle le collecteur (1) comprend une feuille d'aluminium étiré et est muni de traversées (20).

15. Électrode suivant la revendication 13,
- dans laquelle le collecteur de courant comprend une toile de fil métallique.

16. Électrode suivant la revendication 13,
- dans laquelle le collecteur de courant comprend un métal expansé qui a été attaqué.

17. Électrode suivant la revendication 13,
- dans laquelle le collecteur de courant comprend une feuille métallique ayant des trous estampés ou soudés par laser.

18. Procédé de fabrication d'une électrode comprenant les stades de procédé :
(A) on produit sur une surface principale d'un collecteur (1) de courant plat une couche (5) intermédiaire intérieure à conduction métallique ;
(B) on produit sur la couche intermédiaire intérieure une couche (10) intermédiaire extérieure à conduction métallique ;
(C) on produit sur la couche (10) intermédiaire extérieure une première couche (15) d'électrode qui comprend du carbone.

19. Procédé suivant la revendication précédente,
- dans lequel on produit au stade A) du procédé une couche (5) métallique au moyen un procédé CVD ou d'un procédé PVD.

20. Procédé suivant l'une des revendications 18 ou 19,
- dans lequel on produit au stade B) du procédé un alliage (10) métallique au moyen d'un procédé CVD ou d'un procédé PVD.

21. Procédé suivant la revendication précédente,
- dans lequel, au stade A) du procédé, on produit une couche métallique ;
- dans lequel, au stade B), on fait réagir des parties proches de la surface de la couche (5) métallique intérieure sur des substances déposées en phase gazeuse qui sont choisies parmi le carbone, l'azote et le bore en formant un alliage métallique parmi les alliages suivants : carbure de métal, nitrure de métal, carbonitrure de métal et borure de métal.

22. Procédé suivant la revendication 20,
- dans lequel on dépose un alliage de métal en phase gazeuse qui est choisi dans les alliages suivants : carbure de métal, nitrure de métal, carbonitrure de métal et borure de métal.

23. Procédé suivant l'une des revendications 18 à 22,
- dans lequel on rend rugueuse avant le stade B) du procédé dans un stade B1) de procédé supplémentaire la surface extérieure de la couche intermédiaire extérieure.

24. Procédé suivant la revendication précédente,
- dans lequel on rend rugueuse la surface au moyen d'un procédé mécanique ou chimique.

25. Procédé suivant l'une des revendications 18 à 24,
- dans lequel on produit au stade C) du procédé la couche (15) d'électrode par application à la racle d'une phase liquide ou visqueuse qui contient la matière de l'électrode.

26. Procédé suivant l'une des électrodes 18 à 25,
- dans lequel on utilise comme collecteur de courant une feuille d'aluminium ;
- dans lequel on élimine avant le stade A) du procédé des couches superficielles de la feuille d'aluminium pour améliorer la conductivité de la feuille.

27. Condensateur électrochimique,
- comprenant des électrodes suivant l'une des revendications 1 à 17 ;
- dans lequel il est prévu entre les électrodes un séparateur poreux ;
- les électrodes et le séparateur étant en contact avec un électrolyte.
